# EUROPÄISCHE PATENTSCHRIFT

(11) **EP 1 787 043 B1**
(45) Veröffentlichungstag und Bekanntmachung des Hinweises auf die Patenterteilung: **10.12.2008**
(21) Anmeldenummer: 05778273.2
(22) Anmeldetag: 26.07.2005
(51) Int. Cl.: F16H 7/08

(54) **ZUGMITTELFÜHRUNG**
TRACTION MECHANISM GUIDE
COMMANDE DE MECANISME DE TRACTION

(30) Priorität: 10.09.2004 DE 102004043726
(43) Veröffentlichungstag der Anmeldung: 23.05.2007
(73) Patentinhaber: Schaeffler KG, 91074 Herzogenaurach (DE)
(72) Erfinder: ASSEL, Martin, 91593 Burgbernheim (DE)
(86) Internationale Anmeldenummer: PCT/EP2005/008094
(87) Internationale Veröffentlichungsnummer: WO 2006/027049

(56) Entgegenhaltungen:
- DE-A1- 19 717 360
- DE-C1- 19 500 940
- GB-A- 484 128
- US-A- 5 868 638

## Beschreibung

### Gebiet der Erfindung

Die Erfindung betrifft eine Zugmittelführung zum Führen und Spannen eines Zugmittels, die in der Einbaustellung um ein Schwenklager schwenkbar ist.

### Hindergrund der Erfindung

Solche Zugmittelführungen dienen zum Führen und Spannen eines Zugmittels wie eines Riemens oder einer Kette, die in einen Zugmitteltrieb integriert sind. Solche Zugmitteltriebe werden beispielsweise bei Verbrennungskraftmaschinen eingesetzt. Über die Zugmittelführung wird erreicht, dass das Zugmittel bei Lastwechseln stets hinreichend gespannt bleibt, so dass die im Zugmitteltrieb eingebundenen Aggregate über das Zugmittel auch sicher angetrieben werden.

Bekannt sind Zugmittelführungen vornehmlich in Form von Spannschienen, die an einem Ende ein Lager aufweisen, mit dem sie an einem Drittgegenstand schwenkbar befestigt sind. Bekannt sind aber auch Rollen, die an einem Hebelarm angeordnet sind, der seinerseits wiederum schwenkbar gelagert ist. Üblicherweise kommen zum Bewegen der Zugmittelführung in Richtung auf das Zugmittel zum Spannen desselben Spanneinrichtungen zum Einsatz, wobei vornehmlich hydraulische Spannsysteme verwendet werden, die am Motorblock befestigt sind und mit dem Motoröl versorgt werden. Ein solches Spannsystem ist z.B. aus DE 199 57 527 A1 bekannt. An der hydraulischen Spanneinrichtung befindet sich ein Anschlagselement, das gegen eine hydraulische Rückstellkraft bewegbar ist, und an dem die Spannschiene anliegt und gegen das sie gedrückt wird, wenn das Zugmittel beispielsweise verkürzt wird, während das Anschlagelement aufgrund der hydraulischen Rückstellbewegung die Spannschiene wieder nachführt, wenn das Zugmittel beispielsweise eine Längung erfährt. Bei bekannten Systemen kommen also zwei Elemente zum Einsatz, nämlich zum einen die Zugmittelführung selbst, die ein erstes Bauteil darstellt, zum anderen die Spanneinrichtung, die ein zweites separates Bauteil darstellt, das aufwendig am Motor angeordnet und verschraubt wird, und mit dem Motorenölkreislauf gekoppelt werden muss, um seine hydraulische Spannfunktion sicherzustellen. Neben erhöhten Einzelkosten ist damit auch eine aufwendige Lagerhaltung insbesondere in Werkstätten verbunden, die mehrere Teile vorrätig halten müssen. Aus Dokument GB 484 128, das den nächstliegenden Stand der Technik repräsentiert, ist eine Zugmittelführung mit dem Merkmalen des Oberbegriffs des unabhängiges Anspruchs 1 bekannt.

### Zusammenfassung der Erfindung

Der Erfindung liegt damit das Problem zugrunde, eine Zugmittelführung anzugeben, die einfach und kompakt konzipiert ist und obige Nachteile vermeidet.

Zur Lösung dieses Problems ist eine Zugführung vorgesehen, die in der Einbaustellung um ein Schwenklager schwenkbar ist, umfassend eine daran befestigte, gegen das Zugmittel arbeitende Spanneinrichtung, die sich mit einem gegen eine Rückstellkraft beweglichen Anschlagelement an einem Drittgegenstand abstützt.

Bei der erfindungsgemäßen Zugmittelführung ist die Spanneinrichtung an der Zugmittelführung selbst angeordnet, das heißt, sie ist integraler Bestandteil der Zugmittelführung. Das heißt, es handelt sich hier um ein kompaktes Kombinationsbauteil, das beide Funktionen in sich vereint. Ein umständliches Befestigen der Spanneinrichtung am Motorblock sowie die gegebenenfalls mit Dichtigkeitsproblemen verbundene Kopplung eines im Stand der Technik verwendeten hydraulischen Spanners mit dem Motorölkreislauf entfällt hier völlig, nachdem die Spanneinrichtung integraler Bestandteil der Zugmittelführung, also beispielsweise der Spannschiene oder der Spannrolleneinheit ist. Darüber hinaus reduzieren sich auch die Gestehungskosten, nachdem einfach konzipiertere Spanneinrichtungen verwendet werden können. Schließlich verringern sich auch die Lagerhaltungskosten sowohl beim Hersteller als auch beim Anwender.

Die Spanneinrichtung kann ein Federspanner oder ein hydraulischer Spanner mit integrierter Hydraulik oder ein reibungsgedämpfter Spanner sein. Die konkrete Wahl der verwendeten Spanneinrichtung richtet sich letztlich nach dem Einsatzzweck. Während bei einem Federspanner die Rückstellkraft über ein Federelement, bevorzugt eine Spiralfeder, erzeugt wird, wird bei einem hydraulischen Spanner mit integrierter Hydraulik die Rückstellkraft über die im Spanner befindliche Hydraulikflüssigkeit sichergestellt. Ein solcher Spanner ist ein in sich selbst geschlossenes System, das heißt, eine Anbindung an einen externen Hydraulikfluidkreislauf ist hier nicht erforderlich. Bei einem reibungsgedämpften Spanner erfolgt eine, gegebenenfalls zusätzlich zu einer Federdämpfung vorgesehene Dämpfung über die Reibung beweglicher Teile zueinander.

Das Anschlagelement selbst ist zweckmäßigerweise ein beweglicher Kolben, dessen Bewegungsweg, der den Zustellweg und damit den Rückspannweg definiert, von der Auslegung der Spanneinrichtung abhängig ist. Über den Kolben stützt sich die Spanneinrichtung und mit ihr die Zugmittelführung an einem Drittgegenstand, beispielsweise dem Motorblock ab, wobei am freien Ende des Anschlagelements, also des Kolbens, gegebenenfalls auch ein dämpfendes Element, z.B. eine Kunststoff- oder Gummiauflage, vorgesehen sein kann, die ein insbesondere geräuschvolles Anschlagen am Drittgegenstand verhindert, sollte die Zugmittelführung einmal so weit ausgelenkt werden, dass sich Anschlagelement aus seiner Anlage am Drittgegenstand löst.

Nach einer ersten Erfindungsausgestaltung ist es zur integralen Anordnung der Spanneinrichtung beispielsweise an der Spannschiene oder dergleichen zweckmäßig, eine Ausnehmung vorzusehen, in der die Spanneinrichtung angeordnet ist, und aus welcher das Anschlagelement hervorsteht. Dabei kann die Spanneinrichtung bevorzugt so positioniert sein, dass sie bzw. ihre Wirkrichtung in der Bewegungsebene des Zugmittels liegt, das heißt, die Ausnehmung ist so platziert, dass sie mit der Zugmittelebene fluchtet. Ist beispielsweise die Zugmittelführung in Form einer Spannschiene ausgebildet, so liegt die Ausnehmung in Breitenrichtung der Schiene gesehen in der Mitte, mithin also symmetrisch zur Auflage- bzw. Führungsfläche, auf der der Riemen oder die Kette entlang läuft.

Alternativ ist es auch denkbar, beispielsweise bei Hebel- oder Rollenführungen, die Spanneinrichtung seitlich versetzt zur Bewegungsebene des Zugmittels zu positionieren, also beispielsweise von der Seite her an dem Spannerhebel anzuschrauben. Gleichwohl besteht natürlich auch hier die Möglichkeit, die Spanneinrichtung so zu positionieren, dass sie in der Zugmittelebene, in der auch beispielsweise die am Hebel seitlich versetzt angeordnete Rolle liegt, angeordnet ist.

### Kurze Beschreibung der Zeichnungen

Weitere Vorteile und Einzelheiten der Erfindung ergeben sich aus den nachfolgend beschriebenen Ausführungsbeispielen unter Bezugnahme auf die Figuren. Die Figuren sind schematische Darstellungen und zeigen:
- Fig. 1: eine Prinzipdarstellung im Schnitt einer ersten erfindungsgemäßen Zugmittelführung,
- Fig. 2: eine Prinzipdarstellung einer erfindungsgemäßen Zugmittelführung einer zweiten erfindungsgemäßen Ausgestaltung, und
- Fig. 3: eine Prinzipdarstellung einer erfindungsgemäßen Zugmittelführung einer dritten Ausführungsform.

### Detaillierte Beschreibung der Zeichnungen

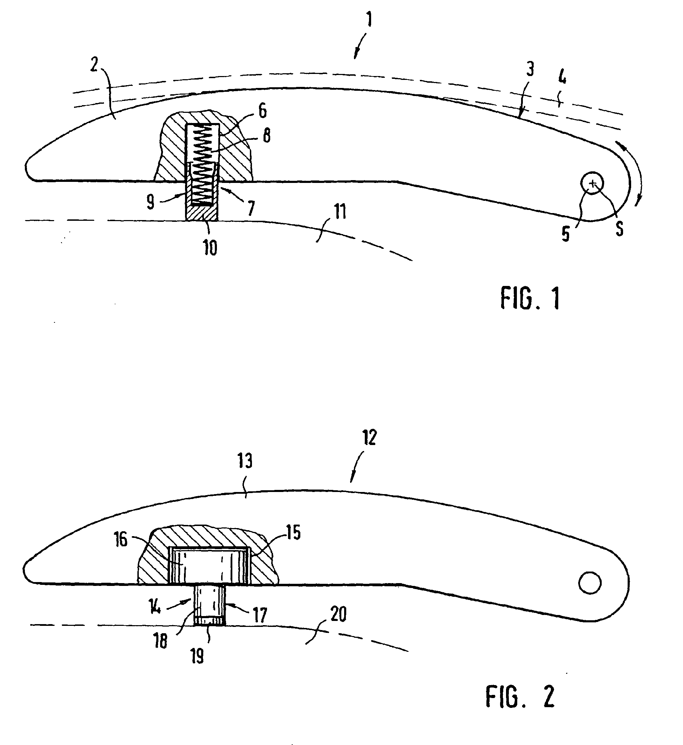

Fig. 1 zeigt eine erfindungsgemäße Zugmittelführung 1 in Form einer Spannschiene 2, die hier teilweise im Schnitt gezeigt ist. Die Spannschiene 2 weist eine Gleit- oder Führungsfläche 3 auf, auf der ein Zugmittel 4, hier angedeutet eine Kette, läuft. Die Spannschiene 2 ist über ein Schwenklager 5 an einem Drittgegenstand, der hier nicht näher gezeigt ist, befestigbar und kann um die gebildete Schwenkachse S verschwenkt werden, wie durch den Doppelpfeil dargestellt ist.

Die in der Regel aus Kunststoff gefertigte Spannschiene weist eine Aufnahme 6 auf, hier in Form einer runden Bohrung, in der eine Spanneinrichtung 7 angeordnet ist. Die Spanneinrichtung 7 ist hier als Federspanner ausgeführt und umfasst ein Federelement 8, hier in Form einer Spiralfeder, die mit einem Ende fest am Boden der Ausnehmung 6 verankert ist. Das andere Ende des Federelements 8 ist mit einem Anschlagelement 9, hier einem Kolben 10, fest verbunden. Der Kolben greift zum Teil in die Ausnehmung 6 ein und ist in dieser geführt, steht im Übrigen aber von der Spannschiene 2 ab. Über den Kolben 10 stützt sich die Spannschiene 2 an einem Drittgegenstand 11, beispielsweise einem Motorblock, ab. Wird nun über das Zugmittel 4 eine Kraft ausgeübt, die die Spannschiene 2 zum Drittgegenstand 11 hindrängt, so wird diese Bewegung über die Spanneinrichtung 7 gedämpft, gleichzeitig wird über das Federelement 8 eine Rückstellkraft erzeugt, die die Spannschiene 2 in die entgegengesetzte Richtung drückt und so das Zugmittel 4 unter Spannung hält, wobei das am Drittgegenstand 11 anliegende Anschlagelement das Gegenlager bildet. Bei dieser Ausführungsform ist also die Spanneinrichtung 7 integraler Bestandteil der Spannschiene 2 und fest mit dieser verbunden. Anstelle der beschriebenen Ausführung, bei der das Federelement 8 unmittelbar in der Ausnehmung 6 liegt, ist es auch denkbar, das Federelement 8 in einem eigenen Gehäuse aufzunehmen und dieses Gehäuse dann in die Ausnehmung 6 einzusetzen und dort zu verankern. Die Anordnung des Anschlagelements 9 und die Verbindung mit dem Federelement 8 ändert sich nicht.

Fig. 2 zeigt eine weitere erfindungsgemäße Ausführungsform einer Zugmittelführung 12, ebenfalls in Form einer Spannschiene 13, wobei hier als Spanneinrichtung 14 ein hydraulischer Spanner zum Einsatz kommt. Dieser hydraulische Spanner, der auch hier in einer Ausnehmung 15 aufgenommen ist, besteht aus einem ein Hydraulikfluid enthaltenden Gehäuse 16, dessen Inneres hier nicht näher gezeigt ist. Gegen die Rückstellkraft der über die im Gehäuseinneren befindliche Hydraulikflüssigkeit realisierten Hydraulik ist ein Anschlagelement 17, auch hier in Form eines Kolbens 18, in und aus dem Gehäuse beweglich, wobei der Kolben 18 auch hier in der Einbaustellung von der Spannschiene 13 absteht. Die Funktionsweise ist letztlich die gleiche wie bezüglich der Ausführungsform gemäß Fig. 1 beschrieben. Im Unterschied hierzu ist bei dieser Ausführungsform am Kolben 18 eine anschlag- und geräuschdämpfende Auflage 19 beispielsweise aus Kunststoff oder Gummi vorgesehen, über die die Spanneinrichtung 14 am Drittgegenstand 20 anliegt.

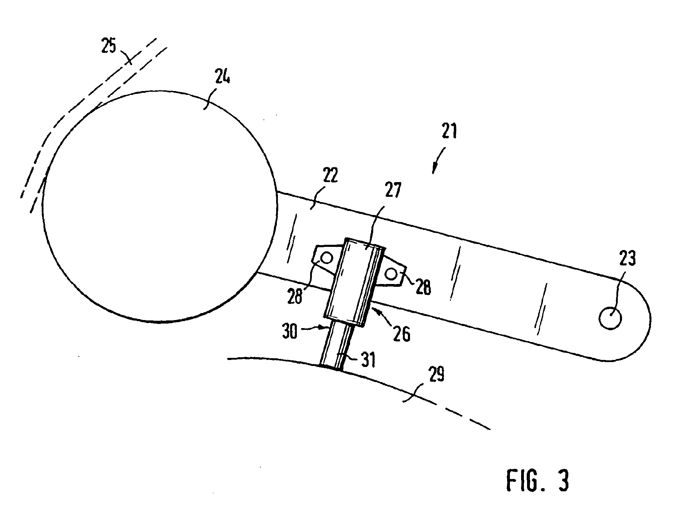

Schließlich beschreibt Fig. 3 eine weitere erfindungsgemäße Ausführungsform einer Zugmittelführung 21 in Form einer Hebel-Rollen-Mimik umfassend einen Hebel 22, der über ein Schwenklager 23 an einem Drittgegenstand befestigbar ist, und an dessen Ende eine Rolle 24 vorgesehen ist, über die ein Zugmittel 25 geführt ist. Bei dieser Ausführungsform ist die Spanneinrichtung 26, auch hier beispielsweise ein Federspanner oder ein reibungsgedämpfter Spanner, am Hebel 22 befestigt. Hierzu sind beispielsweise am Spannergehäuse 27 seitliche Befestigungslaschen 28 vorgesehen, über die die Spanneinrichtung 26 angeschraubt werden kann. Die Abstützung am Drittgegenstand 29 erfolgt auch hier über ein Anschlagelement 30, z.B. in Form eines Kolbens 31. Die Funktion ist die gleiche wie bezüglich der vorangehenden Ausführungsformen beschrieben.

Abschließend ist festzuhalten, dass die Spanneinrichtungen 7 und 14 bevorzugt in der Bewegungsebene des gespannten Zugmittels liegen bzw. wirken, das heißt, die vom Zugmittel bzw. auf das Zugmittel ausgeübte Kraft greift quasi linear am jeweiligen Element an. Bei der Ausführungsform gemäß Fig. 3 ist die Führungsrolle 24 bezüglich der Hebelebene aufgrund der seitlichen Anordnung am Hebel versetzt, weshalb die Wirkrichtung oder Wirkebene der Spanneinrichtung 26 nicht unbedingt in der Ebene der Zugmittelbewegung liegt. Gleichwohl kann dies aber durch entsprechende Wahl der Befestigung und damit einer entsprechenden Positionierung der Spanneinrichtung 26 ausgeglichen werden.

### Bezugszahlen

- 1: Zugmittelführung
- 2: Spannschiene
- 3: Gleit- oder Führungsfläche
- 4: Zugmittel
- 5: Schwenklager
- 6: Aufnahme
- 7: Spanneinrichtung
- 8: Federelement
- 9: Anschlagelement
- 10: Kolben
- 11: Drittgegenstand
- 12: Zugmittelführung
- 13: Spannschiene
- 14: Spanneinrichtung
- 15: Ausnehmung
- 16: Gehäuse
- 17: Anschlagelement
- 18: Kolben
- 19: Auflage
- 20: Drittgegenstand
- 21: Zugmittelführung
- 22: Hebel
- 23: Schwenklager
- 24: Rolle
- 25: Zugmittel
- 26: Spanneinrichtung
- 27: Spannergehäuse
- 28: Befestigungslasche
- 29: Drittgegenstand
- 30: Anschlagelement
- 31: Kolben
- S: Schwenkachse

## Patentansprüche

1. Zugmittelführung zum Führen und Spannen eines Zugmittels, die in der Einbaustellung um ein Schwenklager schwenkbar ist, umfassend eine einen Federspanner (7, 26), einen hydraulischen Spanner (14) oder einen reibungsgedämpften Spanner einschließende, gegen das Zugmittel (4, 25) arbeitende Spanneinrichtung (7, 14, 26), die sich mit einem gegen eine Rückstellkraft beweglichen Anschlagelement (9, 17, 30) an einem Drittgegenstand (11, 20, 29) abstützt, **dadurch gekennzeichnet, dass** das Anschlagelement (9, 17, 30) über ein anschlag- und geräuschdämpfendes Element mittelbar an dem Drittgegenstand (11, 20, 29) abgestützt ist.

2. Zugmittelführung nach Anspruch 1, **dadurch gekennzeichnet, dass** als dämpfendes Element dem Anschlagelement (9, 17, 30) eine Auflage (19) zugeordnet ist.

## Claims

1. Drawing-means guide for guiding and tensioning a drawing means, which drawing-means guide can be pivoted about a pivoting bearing in the installed position, comprising a tensioning device (7, 14, 26) which includes a spring tensioner (7, 26), a hydraulic tensioner (14) or a friction-damped tensioner, operates counter to the drawing means (4, 25) and is supported on a third object (11, 20, 29) by way of a stop element (9, 17, 30) which can be moved counter to a restoring force, **characterized in that** the stop element (9, 17, 30) is supported indirectly on the third object (11, 20, 29) via an element which damps impact and noise.

2. Drawing-means guide according to Claim 1, **characterized in that** a pad (19) is assigned as damping element to the stop element (9, 17, 30).

## Revendications

1. Commande de moyen de traction pour guider et tendre un moyen de traction, laquelle peut pivoter dans la position installée autour d'un palier pivotant, comprenant un dispositif de serrage (7, 14, 26) comprenant un tendeur à ressort (7, 26), un tendeur hydraulique (14) ou un tendeur amorti par friction, travaillant contre le moyen de traction (4, 25), qui s'appuie contre un troisième objet (11, 20, 29) avec un élément de butée (9, 17, 30) déplaçable à l'encontre d'une force de rappel, **caractérisée en ce que** l'élément de butée (9, 17, 30) est supporté par le biais d'un élément amortissant la venue en butée et les bruits, de manière indirecte sur le troisième objet (11, 20, 29).

2. Commande de moyen de traction selon la revendication 1, **caractérisée en ce que** l'on associe à l'élément de butée (9, 17, 30), en tant qu'élément amortisseur, un appui (19).
